# EUROPÄISCHE PATENTSCHRIFT

(11) **EP 2 592 918 B1**
(45) Veröffentlichungstag und Bekanntmachung des Hinweises auf die Patenterteilung: **02.03.2016**
(21) Anmeldenummer: 11733666.9
(22) Anmeldetag: 12.07.2011
(51) Int. Cl.: A01B 35/26

(54) **BODENBEARBEITUNGSWERKZEUG**
SOIL WORKING TOOL
OUTIL DE TRAVAIL DU SOL

(30) Priorität: 15.07.2010 DE 202010008085 U
(43) Veröffentlichungstag der Anmeldung: 22.05.2013
(60) Teilanmeldung: 15176354.7
(73) Patentinhaber: Betek GmbH & Co. KG, 78733 Aichhalden (DE)
(72) Erfinder: WIDMAIER, Helmut, 78733 Aichhalden (DE); SMEETS, Florian, 72270 Baiersbronn (DE)
(74) Vertreter: Herrmann, Jochen
(86) Internationale Anmeldenummer: PCT/EP2011/061875
(87) Internationale Veröffentlichungsnummer: WO 2012/007470

(56) Entgegenhaltungen:
- EP-A2- 0 923 951
- DE-C- 488 478
- FR-A- 818 785
- FR-A1- 2 603 151
- NL-C- 103 987
- US-A1- 2006 231 275

## Beschreibung

Die Erfindung betrifft ein Bodenbearbeitungswerkzeug, insbesondere eine Grubberspitze mit einem Träger, das an einem Schneidenhalter ein Haupt-Schneldelement und wenigstens zwei Neben-Schneidelemente trägt, wobei sowohl das Haupt-Schneidelement als auch die Neben-Schneidelemente jeweils eine Schneidkante aufweisen. Ein solches Bodenbearbeitungswerkzeug ist aus der DE 10 2009 029 894.0 bekannt. Dabei sind die Schneidelemente am Schneidenhalter angelötet, wobei das Haupt-Schneidelement eine quer zur Werkzeug-Vorschubrichtung verlaufende Schneidkante bildet. Die Neben-Schneidelemente sind winklig zu dem Haupt-Schneidelement angestellt und die Schneidkanten sind gegenüber der Schneidkante des Haupt-Schneideelementes versetzt angeordnet.

Es Ist Aufgabe der Erfindung, ein Bodenbearbeitungswerkzeug der eingangs erwähnten Art zu schaffen, mit der sich die Penetration zu Gunsten eines besseren Schneidergebnisses optimieren lässt.

Diese Aufgabe wird mit den Merkmalen des Kennzeichens des Anspruches 1 gelöst, Demgemäß sind die Schneidkanten der Neben-Schneidelemente zueinander parallel verlaufen und die Schneidkante des Haupt-Schneidelementes parallel zu den Schneidkanten der Neben-Schneidelemente angeordnet Ist. Auf diese Welse entsteht ein stufiger Schneideingriff mit sauberen, geraden Schnitten.

Dadurch, dass die Scheidkanten der Neben-Schneidelemente nun nicht mehr wie beim Stand der Technik schräg angeordnet und V-förmig zueinander positioniert sind, ergibt sich ein sauberer gerader Schnitt, der ein eindeutigeres Schneidergebnis liefert und aufgrund der kürzeren Schneidkanten zu einer geringeren erforderlichen Zugleistung führt. Auf diese Weise wird die Penetration in den Boden verbessert. Darüber hinaus können zu Gunsten geringerer Herstellkosten auch kürzere Hartmetall-Längen verwendet werden, wobei eine gleiche Scharbreite gegenüber dem Stand der Technik beibehalten werden kann.

Gemäß einer bevorzugten Erfindungsvarlante kann es vorgesehen sein, dass die Schneidkanten der Neben-Schneidelemente zueinander fluchtend angeordnet sind. Auf diese Welse ergibt sich während des Schneideingriffes eine gleichmäßige Werkzeugbelastung, die insbesondere die Befestigung der Grubberspitze schont.

Besonders gute Schneidergebnisse lassen sich insbesondere dann erzielen, wenn die Schneidkante des Haupt-Schneidelementes mindestens 4 mm von der Schneidkante des Neben-Schneidelementes beabstandet angeordnet Ist. Bei dieser Beabstandung wird zu Gunsten einer geringeren erforderlichen Vorschubleistung ein stufiger Schneideingriff bewirkt. Zudem wird eine Sohlenbildung vermieden.

Es hat sich gezeigt, dass die Schneidkante des Haupt-Schneidelementes maximal 15 mm von der Schneidkante des Neben-Scheidelementes beabstandet sein sollte. Dann ergibt sich eine besonders stabile Werkzeugausführung.

Ein erfindungsgemäßes Bodenbearbeitungswerkzeug kann dergestalt sein, dass der Schneidenhalter Schneidelementaufnahmen für das Haupt-Schneidelement und die Neben-Schneidelemente aufweist, dass die Schneidelementaufnahmen eine Sitzfläche und eine dazu im Winkel stehende Anlagefläche aufweisen, dass das Haupt-Schneidelement und die Neben-Schneidelemente jeweils mit einem Befestigungsabschnitt auf der Sitzfläche und mit einem Schneidansatz auf der Anlagefläche abgestützt sind. Hierdurch ergibt sich eine mechanisch stabile Schneidengeometrie. Weiterhin kann es auch vorgesehen sein dass die Anlageflächen und/oder die Sitzflächen der Neben-Schneidelemente und der Haupt-Schneidelemente zueinander parallel angeordnet sind. Hierbei lässt sich eine einfache, exakte und reproduzlerbare Ausrichtung der Neben-Schneidelemente und des Haupt-Schneidelements sicherstellen.

Gemäß einer denkbaren Erfindungsausgestaltung kann es vorgesehen sein, dass das Haupt-Schneidelement in Vorschubrichtung gegenüber den Neben-Schneidelementen vorsteht oder zurückversetzt zu diesen angeordnet ist.

Bevorzugt sind die Sitzflächen Im Bereich von 8 bis 14 mm zueinander beabstandet angeordnet. Dann ergeben sich stabile Zahngeometrien am Schneidenhalter zur Aufnahme der Schneidelemente. Hierbei kann es Insbesondere auch vorgesehen sein, dass die Anlageflächen mindestens 4 mm, vorzugsweise im Bereich von 15 mm bis 30 mm, zueinander beabstandet angeordnet sind.

Wenn vorgesehen ist, dass die Ableltflächen zueinander Im Winkel, vorzugsweise im Bereich zwischen 0,1° und < 90° angeordnet sind, dann kann über die Anstellung der Ableitflächen der Neben-Schneidelemente gegenüber dem Haupt-Schneidelement die Aggressivität des Bodenbearbeitungswerkzeuges eingestellt werden. Steiler geneigte Ableitflächen führen zu einer stärkeren Materialverdrängung, während flachere Winkel zu einer verringerten erforderlichen Maschinenzugkraft führen.

Eine weiter bevorzugte Erfindungsvariante sieht vor, dass sowohl das Haupt- als auch die Neben-Schneidelemente Ableitflächen aufweisen, die zueinander parallel angeordnet und mindestens 4 mm, vorzugsweise Im Bereich von 5 mm bis 11 mm, zueinander beabstandet angeordnet sind. Über die parallelen Ableitflächen lässt sich das Schneidgut zielgerichtet abführen. Die Ableitflächen dienen weiterhin dem Schutz des Stahlkörpers vor Auswaschungen.

Zu Gunsten einer symmetrischen Kraftverteilung ist es erfindungsgemäß denkbar, dass an dem Schneidenhalter die Neben-Schneidelemente beidseitig symmetrisch zu dem Haupt-Schneidelement angeordnet sind. Dabei ergibt sich, ausgehend von den Neben-Schneidelementen zu dem Hauptschneidelement, ein einwärts gerichteter Materialfluss. Die Neben-Schneidelemente werden zu Gunsten einer geringeren Beanspruchung des Haupt-Schneidelementes stärker verschleißbelastet. Darüber hinaus wird durch den einwärts gerichteten Materialfluss der Schneidenhalter seitlich weniger verschlelßbeansprucht.

Denkbar ist es insbesondere auch, dass beidseits des Haupt-Schneidelementes jeweils wenigstens zwei Neben-Schneidelemente angeordnet sind. Auf diese Weise können mehrere Schneidstufen realisiert werden.

Eine gute Kraftvertellung sowohl auf das Haupt-, als auch auf die Neben-Schneidelemente lässt sich einfach dadurch erreichen, dass die Breite der Schneidkanten der Neben-Schneidelemente mindestens 0,5 mal der Breite der Schneidkante des Haupt-Schneidelementes beträgt.

Ein erfindungsgemäßes Bodenbearbeitungswerkzeug kann dergestalt sein, dass die Schneidkante des Haupt-Schneidelementes quer zur Vorschubrichtung (V) und in Schwerkraftrichtung versetzt zu der Schneidkante des Neben-Schneidelementes steht, dann wird eine Furchenziehung und eine Verringerung der unerwünschten Sohlenbildung erreicht.

Besonders bevorzugt kann es auch vorgesehen sein, dass das Tragteil einen vorstehenden Brechersteg und/oder eine eingetiefte Brechernut aufweist. Hierdurch wird eine Schollenbrechung und/oder Bodenverdrängung erreicht.

Die Erfindung wird im Folgenden anhand von in den Zeichnungen dargestellten Ausführungsbelspielen näher erläutert. Es zeigen:
- Figur 1: eine Grubberspitze In perspektivischer Darstellung;
- Figur 2: die Grubberspitze gemäß Figur 1, längs des in Figur II,II gekennzeichneten Schnittverlaufes;
- Figur 3: eine weitere Ausgestaltungsvariante einer Grubberspitze;
- Figur 4: eine Schnittdarstellung längs des in Figur 3 mit IV-IV markierten Schnittverlaufes;
- Figur 5: eine weitere Ausführungsvariante einer Grubberspitze In perspektivischer Darstellung;
- Figur 6: ein Schnittverlauf längs des in Figur 5 mit V-V markierten Schnittverlaufes;
- Figur 7: eine weitere Ausführungsvariante einer Grubberspitze in perspektivischer Darstellung;
- Figur 8: ein Schnittverlauf längs des in Figur 7 mit VIII-VIII markierten Schnittverlaufes;
- Figur 9: eine weitere Ausführungsvariante einer Grubberspitze in perspektivischer Darstellung;
- Figur 10: ein Schnittverlauf längs des in Figur 9 mit X-X markierten Schnittverlaufes;
- Figur 11: ein Schnittverlauf längs des In Figur 9 mit XI-XI markierten Schnittver laufes;
- Figur 12: eine weitere Ausführungsvariante einer Grubberspitze in perspektivischer Darstellung;
- Figur 13: die Grubberspitze gemäß Figur 12, längs des In Figur XIII-XIII gekennzeichneten Schnittverlaufes;
- Figur 14: eine weitere Ausführungsvariante einer Grubberspitze In perspektivischer Darstellung;
- Figur 15: die Grubberspitze gemäß Figur 15, längs des in Figur XV-XV gekennzeichneten Schnittverlaufes; und
- Figur 16: ein Schnittverlauf längs des in Figur 14 mit XVI-XVI markierten Schnittverlaufes.

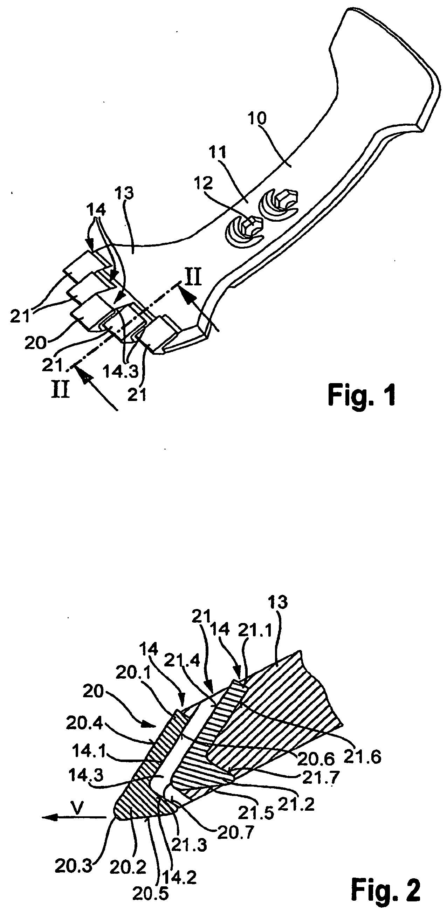

Figur 1 zeigt eine Grubberspitze mit einem Tragteil 10, bestehend aus einem Stahlkörper. Die Grubberspitze besitzt einen Befestigungsabschnitt 11, der mit Befestigungsaufnahmen 12 in Form von Durchbrüchen versehen ist. Das Tragtell 10 weist endseitig einen Schneidenhalter 13 auf, der mit Schneidelementaufnahmen 14 ausgerüstet ist.

Wie die Figur 2 erkennen lässt, weisen die Schneidelementaufnahmen 14 eine Sitzfläche 14.1 auf, die in Vorschubrichtung V der Grubberspitze gerichtet ist. An diese Sitzfläche 14.1 schließt sich winklig eine Anlagefläche 14.2 an. Die Schneidelementaufnahmen 14 dienen zur Aufnahme eines Haupt-Schneidelementes 20 und vier Neben-Schneidelementen 21, wie dies die Figur 1 erkennen lässt. Das Haupt-Schneidelement 20 und die Neben-Schneidelemente 21 können Identisch ausgestaltet sein. Bedarfsweise kann es jedoch auch vorgesehen sein, dass die Neben-Schneidelemente 21 eine geringere Breite quer zur Vorschubrichtung V aufweisen, sonst jedoch Identisch mit dem Haupt-Schneidelement 20 sind, so dass sie in der gleichen Werkzeugform mit verschiebbaren Werkzeugwangen herstellbar sind. Das Haupt-Schneidelement 20 und die Neben-Schneidelemente 21 weisen einen Befestigungsabschnitt 20.1, 21.1 auf, der plattenförmig ausgebildet ist. Der Befestigungsabschnitt 20.1, 21.1 bildet eine Stützfläche 20.6, 21.6. An den Befestigungsabschnitt 20.1, 21.1 ist ein Schneidansatz 20.2, 21.2 einteilig angeformt. Der Schneidansatz 20.2, 21.2 bildet eine weitere Stützfläche 20.7, 21.7. Dabei stehen die Stützflächen 20.6, 20.7 beziehungsweise 21.6, 21.7 rechtwinklig zueinander. Das Haupt-Schneidelement 20 und die Neben-Schneidelemente 21 bilden frontseitig eine Ableitflache 20.4, 21.4, die In einer gerundeten Schneidkante 20.3, 21.3 ausläuft. Die Schneidkante 20.3, 21.3 geht in eine rückwärtige Freifläche 20.5, 21.5 Ober.

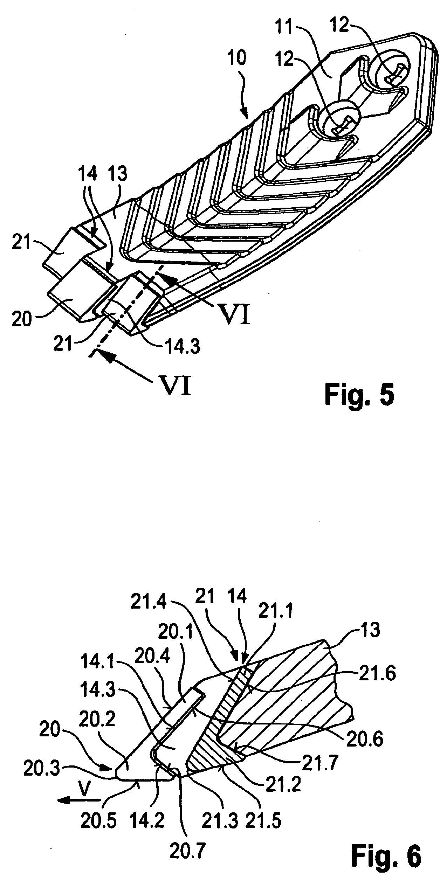

Zur Befestigung der Haupt-Schneidelemente 20 und der Neben-Schneidelemente 21, die aus einem Hartwerkstoff, insbesondere Hartmetall, bestehen, wird eine Lötverbindung verwendet. Denkbar ist es auch, eine Klebeverbindung einzusetzen, so dass eine günstigere Herstellung möglich wird. Das Haupt-Schneidelement 20 und die Neben-Schneidelemente 21 werden mit ihren Stützflächen 20.6, 20.7 bzw. 21.6 und 21.7 auf die korrespondierenden Sitzflächen 14.1 und Anlageflächen 14.2 aufgesetzt. An diesen Flächen erfolgt die stoffschlüssige Verbindung. Im montierten Zustand sind die Schneidkanten 20.3, 21.3 des Haupt-Schneidelementes 20 und der Neben-Schneidelemente 21 zueinander parallel ausgerichtet. Dabei fluchten die Schneidkanten 21.3 der Neben-Schneidelemente 21 paarweise. Weiterhin sind die Ableitflächen 20.4 und 21.4 sowie die Freiflächen 20.5 und 21.5 jewells zueinander parallel ausgerichtet, wie dies die Figur 2 deutlich erkennen lässt. Die Ableltflächen 20.4 und 21.4 und/oder die Freiflächen 20.5 und 21.5 können auch Im Winkel zueinander stehen, wie dies das Ausführungsbeispiel gemäß den Figuren 5 und 6 erkennen lässt. Weiterhin lässt die Figur 2 erkennen, dass sich an die Sitzflächen 14.1 rechtwinklig Flanken 14.3 des Schneidenhalters 13 anschließen. Die Befestigungsabschnitte 20.1 des Haupt-Schneidelementes 20 und der Neben-Schneidelemente 21 decken die Sitzflächen 14.1 quer zur Vorschubrichtung V ab, so dass das relativ weichere Material des Schneidenhalters 13 geschützt ist.

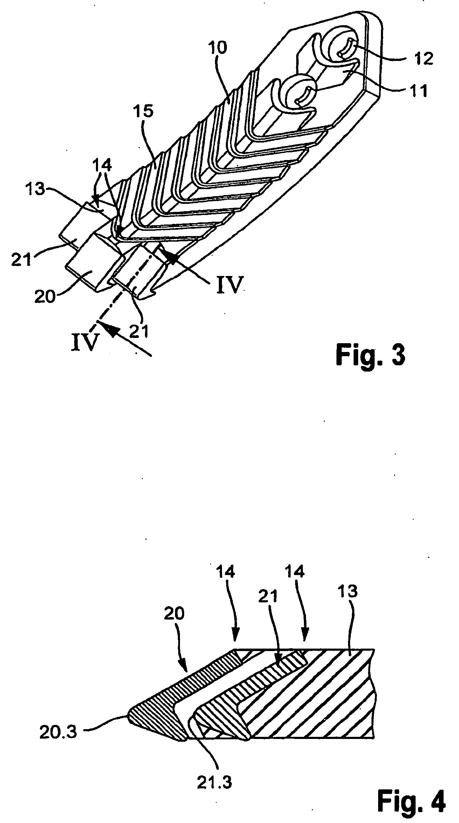

In den Figuren 3 und 4 ist eine weitere Ausgestaltungsvariante einer Grubberspitze dargestellt. Hierbei sind ein Haupt-Schneidelement 20 und zwei Neben-Schneidelemente 21 an einem Schneidenhalter 13 verbaut. Die Gestaltung des Haupt-Schneidelementes 20 und der Neben-Schneidelemente 21 entspricht Im Wesentlichen der gemäß den Figuren 1 und 2, weshalb auf die vorstehenden Ausführungen verwiesen werden kann. Zudem entspricht die Ausgestaltung der Schneidelementaufnahmen 14 Im Wesentlichen denen der Grubberspitze gemäß den Figuren 1 und 2. Insofern wird ebenfalls auf die vorstehenden Ausführungen Bezug genommen. Im Gegensatz zu der Grubberspitze gemäß Figuren 1 und 2 werden vorliegend nur zwel Neben-Schneidelemente 21 verbaut, deren Schneidkanten 20.3 zueinander parallel ausgerichtet sind und zueinander fluchten. Denkbar Ist es auch, dass die Schneidkanten 20.3 zueinander parallel versetzt angeordnet sind. Zusätzlich ist an der Grubberspitze gemäß den Figuren 3 und 4 am Tragteil 10 frontseitig eine angeformte Rippenstruktur verwendet, die die Penetration der Grubberspitze in den Boden unterstützt. Zusätzlich kann sich zwischen den Rippen In den Vertiefungen Abraummaterial verdichten. Dies führt zu einem "natürlichen" Verschlelßschutz.

Die Grubberspitze gemäß den Figuren 5 und 6 stellt eine Abwandlung der Grubberspitze nach Figur 3 und 4 dar. Wie bereits vorstehend erwähnt wurde, stehen die Ableitflächen 21.4 und die Freiflächen 21.5 der Neben-Schneidelemente 21 im Winkel zu der Ableitfläche 20.4 beziehungsweise der Freifläche 20.5 des Haupt-Schneidelementes 20. Dabei ist das Haupt-Schneidelement 20 flacher zur Vorschubrichtung V angestellt, als die Neben-Schneidelemente 21. Damit bewirkt das Haupt-Schneidelement 20 einen schärferen Eingriff in den Boden, während die Neben-Schneidelemente 21 für eine größere Verdrängung sorgen.

Figur 6 lässt erkennen, dass die Schneidkanten 21.3 der Neben-Schneidelemente 21 quer zur Vorschubrichtung V und entgegen der Schwerkraftrichtung gegenüber der Schneidkante 20.3 des Haupt-Schneidelementes 20 versetzt angeordnet ist. Hierdurch entsteht eine geringere Sohlenbildungsneigung, da das Haupt-Schneidelement 20 tiefere Furchen zieht.

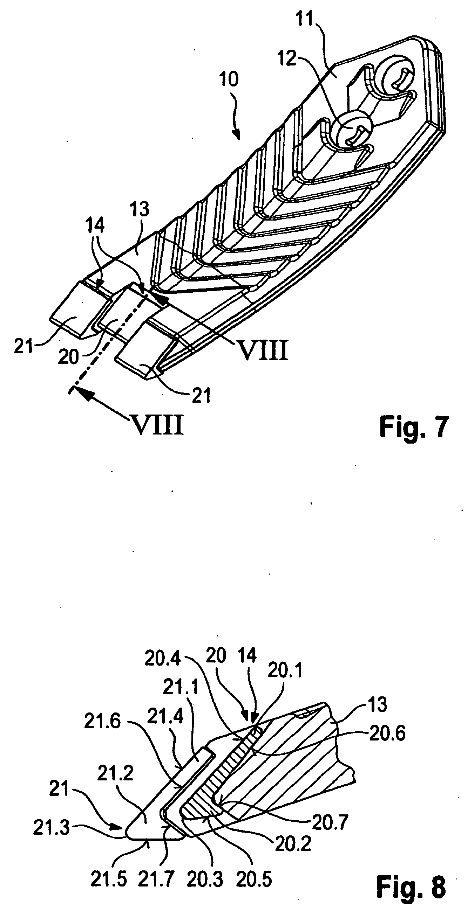

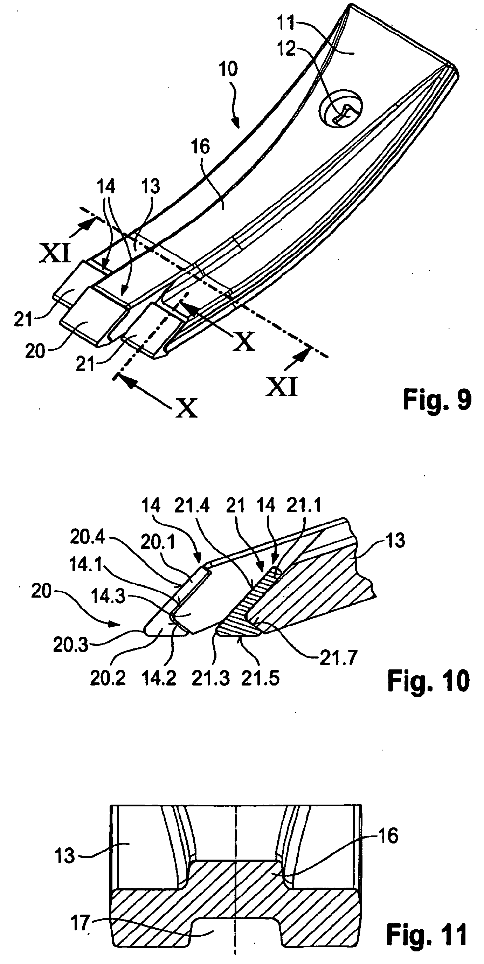

Der gleiche Effekt kann auch dann erreicht werden wenn die Schneidkanten 21.3 der Neben-Schneidelemente 21 tiefer stehen, als die Schneidkante 20.3 des Haupt-Schneidelementes 20. Eine solche Ausführungsvariante zeigen Figuren 8 bis 10. Wie diese Zeichnungen veranschaulichen, ist das Tragtell 10 weiterhin an seiner in Vorschubrichtung V vorderen Seite mit einem vorstehenden Brechersteg 16 ausgestattet. Dieser bildet die Schneidelementaufnahme 14 für das Haupt-Schneidelement 20. Ausgehend von dem Haupt-Schneidelement 20 verbreitert der Brechersteg 16 sich kontinuierlich In Richtung auf das dem Haupt-Schneidelement 20 abgewandten Ende des Tragteils 10. Damit wird ein spannungsoptimlerter Aufbau erreicht. Zusätzlich steift der Brechersteg 16 auch noch das Tragtell 10 aus und erhöht das Widerstandmoment gegen Biegung In Hauptkraftrichtung. Figur 10 lässt erkennen, dass rückwärtig eine Brechernut 17 in das Tragteil 10 eingetieft ist. Diese erstreckt sich wieder, ausgehend vom Haupt-Schneidelement 20 in Richtung zum rückwärtigen Ende des Tragtells 10, wie die Figuren 9 und 10 erkennen lassen.

Der vorstehende Brechersteg 16 sorgt für eine gute Schollenzerteilung und in die Brechernut 17 kann zu Gunsten einer geringeren erforderlichen Zugleistung ein gewisser Materialabfluss bewirkt werden. Zudem wirkt diese Bauweise auch der unerwünschten Sohlenbildung entgegen.

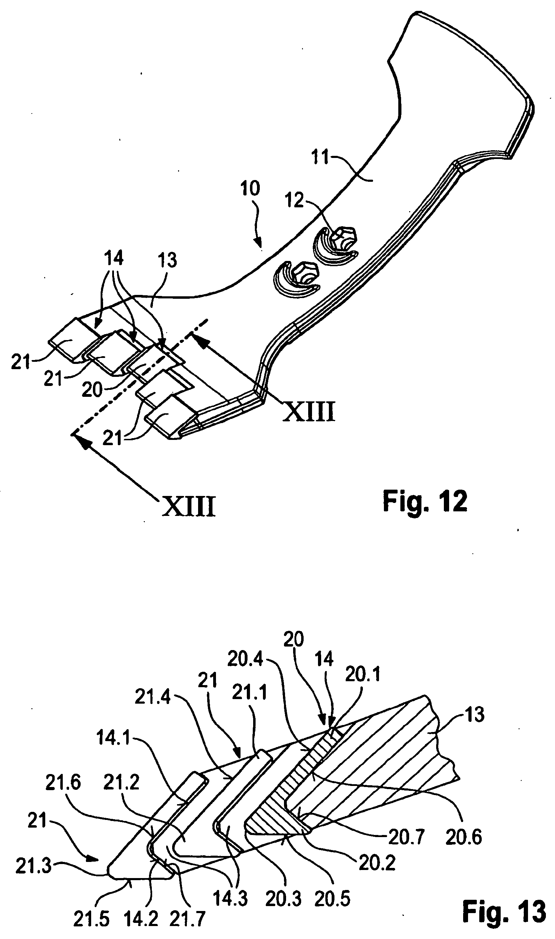

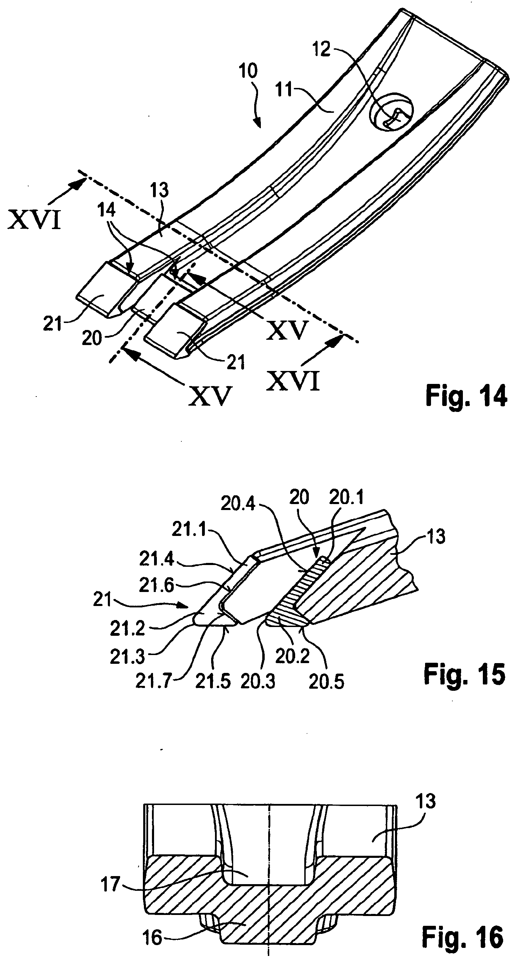

Ein gleicher Effekt kann auch erreicht werden, wenn umgekehrt vorderseitig eine Brechernut 17 und rückseitig ein Brechersteg 16 am Tragteil 10 angeformt sind. Eine solche Konstruktion zeigt das Ausführungsbelspiel gemäß den Figuren 13 bis 15.

Die Figuren 7 und 8 sowie 11 bis 15 zeigen Ausführungsbeispiele, bei denen das Haupt-Schneidelement 20 entgegen der Vorschubrichtung V gegenüber den Neben-Schneidelementen 21 zurückversetzt angeordnet sind. Dementsprechend trifft Immer zuerst das vordere Paar Neben-Schneidelemente 21 auf den Boden und führt zu einer ersten Zertellungswirkung. Anschließend greift das zweite Paar Neben-Schneidelemente 21 (Figuren 11, 12) beziehungsweise abschließend das Haupt-Schneidelement 20 ein. Der Verschleiß verteilt sich daher stärker auf die beiden Neben-Schneidelemente 21. Infolge dieser verschleißoptimierten Werkzeugauslegung können insbesondere auch für die Neben-Schneldelemente 21 und das Haupt-.Schneidelement 20 gleiche Teile verwendet werden.

## Patentansprüche

1. Bodenbearbeitungswerkzeug, insbesondere eine Grubberspitze mit einem Tragteil (10), wobei der Tragteil (10) endseitig einen Schneidenhalter (13) aufweist, wobei der Schneidenhalter (13) ein Haupt-Schneidelement (20) und wenigstens zwei Neben-Schneidelemente (21) trägt, wobei das Haupt-Schneidelement (20) und die Neben-Schneidelemente (21) an Schneidelementaufnahmen (14) des Schneidenhalters (13) befestigt sind, wobei sowohl das Haupt-Schneidelement (20) als auch die Neben-Schneidelemente (21) jeweils eine Schneidkante (20.3, 21.3) aufweisen, wobei die Schneidkanten (21.3) der Neben-Schneidelemente (21) versetzt zu der Schneidkante (20.3) des Haupt-Schneidelementes (20) angeordnet sind, **dadurch gekennzeichnet, dass**, die Schneidkanten (21.3) der Neben-Schneidelemente (21) zueinander parallel verlaufen, und die Schneidkante (20.3) des Haupt-Schneidelementes (20) parallel zu den Schneidkanten (21.3) der Neben-Schneidelemente (21) steht.

2. Bodenbearbeitungswerkzeug nach Anspruch 1,
**dadurch gekennzeichnet,**
**dass** die Schneidkanten (21.3) der Neben-Schneidelemente (21) zueinander fluchtend angeordnet sind.

3. Bodenbearbeitungswerkzeug nach Anspruch1 oder 2,
**dadurch gekennzeichnet,**
**dass** die Schneidkante (20.3) des Haupt-Schneidelementes (20) mindestens 4 mm von der Schneidkante (21.3) des Neben-Schneidelementes (21) beabstandet angeordnet ist.

4. Bodenbearbeitungswerkzeug nach einem der Ansprüche 1 bis 3,
**dadurch gekennzeichnet,**
**dass** die Schneidkante (20.3) des Haupt-Schneidelementes (20) maximal 15 mm von der Schneidkante (21.3) des Neben-Schneidelementes (21) beabstandet angeordnet Ist.

5. Bodenbearbeitungswerkzeug nach einem der Ansprüche 1 bis 4,
**dadurch gekennzeichnet,**
**dass** der Schneidenhalter (13) Schneidelementaufnahmen (14) für das Haupt-Schneidelement (20) und die Neben-Schneidelemente (21) aufweist, dass die Schneidelementaufnahmen (14) eine Sitzfläche (14.4) und eine dazu im Winkel stehende Anlagefläche (14.2) aufweisen,
**dass** das Haupt-Schneidelement (20) und die Neben-Schneidelemente (21) jeweils mit einem Befestigungsabschnitt (20.1; 21.1) auf der Sitzfläche (14.1) und mit einem Schneidansatz (20.2; 21.2) auf der Anlagefläche (14.2) abgestützt sind, und

6. Bodenbearbeitungswerkzeug nach Anspruch 5,
**dadurch gekennzeichnet,**
**dass** die Anlageflächen (14.2) und/oder die Sitzflächen (14.1) der Neben-Schneidelemente (21) und des Haupt-Schneidelementes (20) zueinander parallel angeordnet sind.

7. Bodenbearbeitungswerkzeug nach einem der Ansprüche 1 bis 6,
**dadurch gekennzeichnet,**
**dass** das Hauptschneidelement (20) in Vorschubrichtung (V) gegenüber den Neben-Schneidelementen vorsteht oder zurückversetzt zu diesen angeordnet ist.

8. Bodenbearbeitungswerkzeug nach einem der Ansprüche 5 bis 7,
**dadurch gekennzeichnet,**
**dass** die Sitzflächen (14.1) im Bereich von 8 mm bis 14 mm zueinander beabstandet angeordnet sind.

9. Bodenbearbeitungswerkzeug nach Anspruch 5 bis 8,
**dadurch gekennzeichnet,**
**dass** die Anlageflächen (14.2) mindestens 4 mm, vorzugsweise im Bereich von 10 mm bis 15 mm zueinander beabstandet angeordnet sind.

10. Bodenbearbeitungswerkzeug nach, einem der Ansprüche 1 bis 9,
**dadurch gekennzeichnet,**
**dass** sowohl das Haupt- als auch die Neben-Schneidelemente (20, 21) Ableitflächen (20.4; 21.4) aufweisen, die zueinander parallel angeordnet und mindestens 4 mm, vorzugsweise im Bereich von 5 mm bis 11 mm, zueinander beabstandet angeordnet sind.

11. Bodenbearbeitungswerkzeug nach einem der Ansprüche 1 bis 10,
**dadurch gekennzeichnet,**
**dass** die Ableitflächen (20.4; 21.4) zueinander im Winkel, vorzugsweise Im Bereich zwischen 0,1° und 90° angeordnet sind.

12. Bodenbearbeitungswerkzeug nach einem der Ansprüche 1 bis 11,
**dadurch gekennzeichnet,**
**dass** an dem Schneidenhalter (13) die Neben-Schneidelemente (21) beidseitig symmetrisch zu dem Haupt-Schneidelement (20) angeordnet sind.

13. Bodenbearbeitungswerkzeug nach einem der Ansprüche 1 bis 12,
**dadurch gekennzeichnet,**
**dass** beidseits des Haupt-Schneidelements (20) jeweils wenigstens zwei Neben-Schneidelemente (21) angeordnet sind.

14. Bodenbearbeitungswerkzeug nach einem der Ansprüche 1 bis 13,
**dadurch gekennzeichnet,**
**dass** die Breite der Schneidkanten (21.3) der Neben-Schneidelemente (21) mindestens 0,5 Mal der Breite der Schneidkante (20.3) des Haupt-Schneidelementes (20) beträgt

15. Bodenbearbeitungswerkzeug nach einem der Ansprüche 1 bis 14,
**dadurch gekennzeichnet,**
**dass** die Schneidkante (20.3) des Haupt-Schneidelementes (20) quer zur Vorschubrichtung (V) und in Schwerkraftrichtung versetzt zu der Schneidkante (21.3) des Neben-Schneidelementes (21) steht.

16. Bodenbearbeitungswerkzeug nach einem der Ansprüche 1 bis 15,
**dadurch gekennzeichnet,**
**dass** das Tragteil (10) einen vorstehenden Brechersteg (16) und/oder eine eingetiefte Brechernut (17) aufweist.

## Claims

1. Soil working tool, in particular a grubber tip with a supporting part (10), wherein the supporting part (10) has a cutting-edge holder (13) on the end side, wherein the cutting-edge holder (13) supports a main cutting element (20) and at least two secondary cutting elements (21), wherein the main cutting element (20) and the secondary cutting elements (21) are fastened to cutting-element receptacles (14) of the cutting-edge holder (13), wherein both the main cutting element (20) and also the secondary cutting elements (21) in each case have a cutting edge (20.3, 21.3), wherein the cutting edges (21.3) of the secondary cutting elements (21) are arranged offset with respect to the cutting edge (20.3) of the main cutting element (20), **characterized in that** the cutting edges (21.3) of the secondary cutting elements (21) run parallel to one another, and the cutting edge (20.3) of the main cutting element (20) is parallel to the cutting edges (21.3) of the secondary cutting elements (21).

2. Soil working tool according to Claim 1, **characterized in that** the cutting edges (21.3) of the secondary cutting elements (21) are arranged aligned with one another.

3. Soil working tool according to Claim 1 or 2, **characterized in that** the cutting edge (20.3) of the main cutting element (20) is arranged spaced apart at least 4 mm from the cutting edge (21.3) of the secondary cutting element (21).

4. Soil working tool according to one of Claims 1 to 3, **characterized in that** the cutting edge (20.3) of the main cutting element (20) is arranged spaced apart at a maximum of 15 mm from the cutting edge (21.3) of the secondary cutting element (21).

5. Soil working tool according to one of Claims 1 to 4, **characterized in that** the cutting-edge holder (13) has cutting-element receptacles (14) for the main cutting element (20) and the secondary cutting elements (21), **in that** the cutting-element receptacles (14) have a seat surface (14.4) and a contact surface (14.2) which is at an angle with respect thereto, **in that** the main cutting element (20) and the secondary cutting elements (21) are each supported on the seat surface (14.1) with a fastening section (20.1; 21.1) and on the contact surface (14.2) with a cutting lug (20.2; 21.2).

6. Soil working tool according to Claim 5, **characterized in that** the contact surfaces (14.2) and/or the seat surfaces (14.1) of the secondary cutting elements (21) and of the main cutting element (20) are arranged parallel to one another.

7. Soil working tool according to one of Claims 1 to 6, **characterized in that** the main cutting element (20) projects in the advancing direction (V) in relation to the secondary cutting elements or is arranged set back with respect thereto.

8. Soil working tool according to one of Claims 5 to 7, **characterized in that** the seat surfaces (14.1) are arranged spaced apart from one another within the range of 8 mm to 14 mm.

9. Soil working tool according to Claim 5 to 8, **characterized in that** the contact surfaces (14.2) are arranged spaced apart from one another by at least 4 mm, preferably within the range of 10 mm to 15 mm.

10. Soil working tool according to one of Claims 1 to 9, **characterized in that** both the main cutting element and also the secondary cutting elements (20, 21) have deflecting surfaces (20.4; 21.4) which are arranged parallel to one another and are arranged spaced apart from one another by at least 4 mm, preferably within the range of 5 mm to 11 mm.

11. Soil working tool according to one of Claims 1 to 10, **characterized in that** the deflecting surfaces (20.4; 21.4) are arranged at an angle with respect to one another, preferably within the range of between 0.1° and 90°.

12. Soil working tool according to one of Claims 1 to 11, **characterized in that** the secondary cutting elements (21) are arranged on the cutting-edge holder (13) symmetrically on both sides with respect to the main cutting element (20).

13. Soil working tool according to one of Claim 1 to 12, **characterized in that** at least two secondary cutting elements (21) are arranged in each case on both sides of the main cutting element (20).

14. Soil working tool according to one of Claims 1 to 13, **characterized in that** the width of the cutting edges (21.3) of the secondary cutting elements (21) is at least 0.5 times the width of the cutting edge (20.3) of the main cutting element (20).

15. Soil working tool according to one of Claims 1 to 14, **characterized in that** the cutting edge (20.3) of the main cutting element (20) is offset transversely with respect to the advancing direction (V) and in the direction of gravity with respect to the cutting edge (21.3) of the secondary cutting element (21).

16. Soil working tool according to one of Claims 1 to 15, **characterized in that** the supporting part (10) has a projecting crusher web (16) and/or a recessed crusher groove (17).

## Revendications

1. Outil de travail du sol, en particulier pointe de cultivateur comprenant une partie porteuse (10), la partie porteuse (10) présentant du côté de l'extrémité un support de lames (13), le support de lames (13) portant un élément de lame principal (20) et au moins deux éléments de lame auxiliaires (21), l'élément de lame principal (20) et les éléments de lame auxiliaires (21) étant fixés au niveau de logements d'éléments de lame (14) du support de lames (13), l'élément de lame principal (20) ainsi que les éléments de lame auxiliaires (21) présentant chacun une arête de coupe (20.3, 21.3), les arêtes de coupe (21.3) des éléments de lame auxiliaires (21) étant disposées de manière décalée par rapport aux arête de coupe (20.3) de l'élément de lame principal (20), **caractérisé en ce que** les arêtes de coupe (21.3) des éléments de lame auxiliaires (21) s'étendent parallèlement les unes aux autres et l'arête de coupe (20.3) de l'élément de lame principal (20) s'étend parallèlement aux arêtes de coupe (21.3) des éléments de lame auxiliaires (21).

2. Outil de travail du sol selon la revendication 1,
**caractérisé en ce que**
les arêtes de coupe (21.3) des éléments de lame auxiliaires (21) sont disposées en affleurement les unes par rapport aux autres.

3. Outil de travail du sol selon la revendication 1 ou 2,
**caractérisé en ce que**
l'arête de coupe (20.3) de l'élément de lame principal (20) est disposée à une distance d'au moins 4 mm de l'arête de coupe (21.3) de l'élément de lame auxiliaire (21).

4. Outil de travail du sol selon l'une quelconque des revendications 1 à 3,
**caractérisé en ce que**
l'arête de coupe (20.3) de l'élément de lame principal (20) est disposée à une distance de 15 mm au maximum de l'arête de coupe (21.3) de l'élément de lame auxiliaire (21).

5. Outil de travail du sol selon l'une quelconque des revendications 1 à 4,
**caractérisé en ce que**
le support de lames (13) présente des logements d'éléments de lame (14) pour l'élément de lame principal (20) et les éléments de lame auxiliaires (21),
**en ce que** les logements d'éléments de lame (14) présentent une surface de siège (14.4) et une surface d'appui (14.2) disposée suivant un certain angle par rapport à celle-ci,
**en ce que** l'élément de lame principal (20) et les éléments de lame auxiliaires (21) sont à chaque fois supportés avec une portion de fixation (20.1 ; 21.1) sur la surface de siège (14.1) et par un insert de coupe (20.2 ; 21.2) sur la surface d'appui (14.2).

6. Outil de travail du sol selon la revendication 5,
**caractérisé en ce que**
les surfaces d'appui (14.2) et/ou les surfaces de siège (14.1) des éléments de lame auxiliaires (21) et de l'élément de lame principal (20) sont disposées parallèlement les unes aux autres.

7. Outil de travail du sol selon l'une quelconque des revendications 1 à 6,
**caractérisé en ce que**
l'élément de lame principal (20) fait saillie vers l'avant dans la direction d'avance (V) par rapport aux éléments de lame auxiliaires ou est disposé en retrait par rapport à ceux-ci.

8. Outil de travail du sol selon l'une quelconque des revendications 5 à 7,
**caractérisé en ce que**
les surfaces de siège (14.1) sont disposées à une distance de 8 mm à 14 mm les unes des autres.

9. Outil de travail du sol selon les revendications 5 à 8,
**caractérisé en ce que**
les surfaces d'appui (14.2) sont disposées à une distance d'au moins 4 mm, de préférence de 10 à 15 mm les unes des autres.

10. Outil de travail du sol selon l'une quelconque des revendications 1 à 9,
**caractérisé en ce que**
l'élément de lame principal ainsi que les éléments de lame auxiliaires (20, 21) présentent des surfaces de dérivation (20.4 ; 21.4) qui sont disposées parallèlement les unes aux autres et qui sont disposées à une distance d'au moins 4 mm, de préférence de 5 mm à 11 mm les unes des autres.

11. Outil de travail du sol selon l'une quelconque des revendications 1 à 10,
**caractérisé en ce que**
les surfaces de dérivation (20.4 ; 21.4) sont disposées les unes par rapport aux autres suivant un certain angle, de préférence compris entre 0,1° et 90°.

12. Outil de travail du sol selon l'une quelconque des revendications 1 à 11,
**caractérisé en ce que**
les éléments de lame auxiliaires (21) sont disposés sur le support de lames (13) de chaque côté symétriquement par rapport à l'élément de lame principal (20).

13. Outil de travail du sol selon l'une quelconque des revendications 1 à 12,
**caractérisé en ce que**
de chaque côté de l'élément de lame principal (20) sont à chaque fois disposés au moins deux éléments de lame auxiliaires (21).

14. Outil de travail du sol selon l'une quelconque des revendications 1 à 13,
**caractérisé en ce que**
la largeur des arêtes de coupe (21.3) des éléments de lame auxiliaires (21) vaut au moins 0,5 fois la largeur de l'arête de coupe (20.3) de l'élément de lame principal (20).

15. Outil de travail du sol selon l'une quelconque des revendications 1 à 14,
**caractérisé en ce que**
l'arête de coupe (20.3) de l'élément de lame principal (20) est transversale à la direction d'avance (V) et, dans la direction de la force de gravité, décalée par rapport à l'arête de coupe (21.3) de l'élément de lame auxiliaire (21).

16. Outil de travail du sol selon l'une quelconque des revendications 1 à 15,
**caractérisé en ce que**
la partie porteuse (10) présente une nervure de concassage saillante (16) et/ou une rainure de concassage renfoncée (17).
